# EUROPEAN PATENT APPLICATION

(11) **EP 1 415 539 A1**
(43) Date of publication of application: **06.05.2004**
(21) Application number: 02024497.6
(22) Date of filing: 30.10.2002
(51) Int. Cl.: A21D 8/04, A21D 13/08

(54) **Flour based food product comprising thermostable alpha-amylase**

(71) Applicant: NESTEC S.A., 1800 Vevey (CH)
(72) Inventor: Nicolas, Pierre, 1806 Saint-Legier (CH); Hansen, Carl Erik, 1066 Epalinges (CH)

(57) **Abstract**

The invention relates to a flour based food product comprising a thermostable α-amylase and in-situ modified starch, as well as to a process comprising the steps of making a batter by mixing at least flour, water and a thermo-resistant α-amylase and cooking the batter on at least one hot surface, to the use of thermostable α-amylase to manipulate textural attributes of flour based food products, and to a method for modifying starch in a wafer without increasing batter viscosity. Preferred flour based food products are wafers, biscuits and crackers.

## Description

### Field of the invention

The present invention relates to a wafer produced by using thermostable α-amylase at the baking step, as well as to a process to manipulate textural attributes of wafers, by using such α-amylases during the baking step and as the use of such α-amylase to manipulate textural properties of wafers.

### Background of the invention

α-amylases are well known in the art and are used in many fields, especially in bread baking but also in confectionery. Some patents refer to the use of α-amylase to retard staling of breads and bakery products. It is for example the case of US 2.615.810 to Irwin Stone, disclosing that the addition of small amounts of a heat-stable amylolytic enzyme to the dough before baking, it is possible to prevent, inhibit or retard the rate of staling of bread. This heat-stable enzyme may be obtained from bacterial sources and is characterised by strong starch liquefying and dextrinizing power, α-amylase activity, and proteolytic activity, and is stable to temperatures of 80°C to 90°C. The anti-staling process is also, according to the patent, applicable to cakes and other bakery products.

In a quite similar connection, WO 2001011975 relates to the production of baked goods with delayed staling by incorporating into the dough particles of α-amylase coated with lipase for protection and sustained release, and US 5.059.430 to Enzyme Bio Systems Ltd protects a composition for retarding staleness of baked goods comprising a mixture of microbial and bacterial α-amylases.

In a different connection, US 4.299.848 to Deutt Itt discloses the selective inactivation of protease in commercial α-amylase, by controlling the heating of an aqueous solution with buffer; this is used as a bread preservative.

What is also known is the use of enzymes in wafer manufacture, the use of amylases in baking industry and the use of thermostable bacterial α-amylase in starch industry and in the food industry.

Wafer manufacture uses enzymes, preferably endo-proteinases (such as neutral bacterial proteinase from *Bacillus subtilis* or papain from *Carica papaya),* to hydrolyse the peptide bonds in wheat gluten, having the effect to prevent gluten lumps formation, and also xylanase (pentosanase) to hydrolyse the xylan backbone in arabinoxylan (pentosan), having the effect to decrease water binding capacity of wheat pentosans and to redistribute water among other flour components. Combinations of these enzymes are also used, mainly to decrease batter viscosity, make batters more homogenous, increase machinability, allow standard flour grades to be employed and/or increase the flour level in batter. These preparations have become widely accepted (Food Marketing & Technology, April 1994, p. 14).

The baking industry also uses enzymes, in particular fungal α-amylases in bread making and in the biscuit industry. Fungal α-amylases in bread making convert damaged starch into maltodextrins (subsequently converted into maltose by beta-amylase and carbon dioxide by yeast), liberates water from damaged starch granules and degrades a part of gelatinising starch during early phases of baking. The effects of these actions consist in an increase of the loaf volume by improving the gas retaining capacity, an improved texture, a more uniform crumb structure, a darker crust, an improved crumb softness and retards in staling. Usually, fungal α-amylases are preferred because they present a low thermostability and therefore are inactivated by heat at the end of the baking process.
α-amylase in biscuit industry acts by liberating water from damaged starch granules and also by providing a substrate for yeasts to generate carbon dioxide (for instance premium crackers). The main effects are a prevention of checking (cracks during drying) as well as a leavening effect and a flavour development (premium crackers).

WO 0239820 to The Pillsbury Company is directed to the use of high molecular weight starch hydrolysates or crystalline hydrate formers (such as maltose, isomaltose, trehalose, lactose and raffinose) in food product, such as bakery products, where crispness is desired in a high moisture environment.

Thermostable bacterial α-amylase are used in starch industry; in fact, the endoamylases hydrolyse the 1,4-α-glucosidic linkages in amylose and amylopectin; consequently, starch is broken down to soluble dextrins. This is mostly used in continuous liquefaction of starch at high temperatures (steam jet-cookers or similar equipments, for example).

Thermostable α-amylases are also used in the food industry, usually for the removal of starch hazes from syrups, the liquefaction of starch for brewing and alcohol fermentations or the production of pre-cooked cereals.

### Summary of the invention

We have now discovered that thermostable α-amylases have the ability to give different new textures to wafers by in-situ modifying the flour starch. Accordingly, the present invention also relates to a process to manipulate textural attributes of wafers by using thermostable α-amylases, and to the use of thermostable α-amylases to manipulate textural attributes of wafers.

### Figures

Fig.1 shows cross-sections of the wafers obtained with varying amounts of thermostable α-amylase in the batter preparation (α-amylase: % in batter).

Fig. 2 presents a chromatogram of maltodextrins produced in wafers according to the level of α-amylase added to the batter. The number of glucose residues in each oligosaccharide is indicated on the right.

Fig.3 shows plots of measured hissing times versus the enzyme concentrations.

### Detailed description of the invention

In the present description, the term "flour based food product" has to be understood as a product such as a wafer, a biscuit or a cracker, among others, having a humidity at the end of the backing step that does not exceed 6% humidity. The preferred flour based food product according to the invention is a wafer.

The term "food product" is intended to encompass any consumable matter. Hence, it may be a product intended for the consumption by humans, but the term also encompasses products to be consumed by animals, for example pets, such as dogs, cats, rabbits, guinea pigs, mice, rats, birds (for example parrots), reptiles and fish (for example goldfish). However, the term also includes food to be consumed by other domesticated animals, such as livestock, for example, cattle, horses, pigs, sheep, goats, buffaloes, camels, and the like.

Manufacturing wafers consists in preparing a batter containing mainly flour and water to which other minor ingredients may be added. Typically 40 to 50 % flour in batter is used in the manufacture of commercial flat wafers. Common formulations may also comprise at least one of the following ingredients: fat and/or oil, lecithin and/or emulsifiers, sugar, whole egg, salt, sodium bicarbonate, ammonium bicarbonate, skim milk powder, soy flour, yeast, and/or enzymes such as xylanases or proteases, for example. In the wafer manufacture, after preparation the batter is usually cooked between two heated engraved metal plates for a determined time at a certain temperature, for instance 2 min at 160°C, to produce large flat wafer sheets with a low moisture level. After cooling the wafers are processed according to the requirements of the final product.

Wafer texture results from the generation of gas cells in a gel structure mainly composed of gelatinised starch. The high temperature of the baking plates induces a rapid gelatinisation of starch granules present in the flour and production and expansion of the gas bubbles inside the gelatinous matrix. These gas cells are, in the common practice, mainly generated from gassing agents such as added bicarbonates or carbon dioxide produced by yeast during batter fermentation and from steam produced by heating. Therefore the wafer can be seen as a solid foam of gas cells contained by cell walls of gelatinised and dried starch.

The present invention describes an enzymatic process able to produce wafers of different textures and properties suitable for use as such or for incorporation in food products, confectionery products or other sugar-based products. As described above, a batter usually comprises around 40-50% flour, for example wheat flour, which itself contains approximately 70% of starch mainly occurring in the form of granules. This starch cannot be modified by amylolytic enzymes before gelatinisation, a process involving dissolution of starch granules by heating. However gelatinisation of the flour starch in the batter tank by heat treatment and subsequent enzymatic hydrolysis is not feasible since it causes a dramatic increase in viscosity and makes the batter no longer pumpable and machinable.

Consequently, one aspect of the invention relates to an enzymatic modification of starch gelatinised at the baking step to create new wafer textures "at the request". Accordingly, thermostable α-amylases are used to reduce the molecular weight of starch. The enzyme used is preferably of bacterial origin, is mostly active at a pH of 5 to 7 and at a temperature of about 70 to 105°C. For example, the enzyme can be produced from *Bacillus species* or any other bacteria having an α-amylase activity. Eventually, the enzyme could be a fungal α-amylase, an α-amylase from plant origin, especially from cereal origin. By and large, the existing α-amylases that exhibit relatively low thermal stability, being deactivated rapidly at above 65°C, are not contemplated for practice of this invention.

Although not wishing to be bound by theory, we believe that adding α-amylases in wafers and using them in wafer processing induce two main effects which will affect the wafer texture. First, the enzyme will induce a decrease in the starch viscosity at the baking step, leading to a modification in the expansion and the size of gas bubbles. Second, the enzyme will modify the macromolecular structure of starch leading to a modification of the physical properties in the solid cell walls in the dried wafer.

Amylolytic enzymes can only attack starch efficiently if starch granules have enter a gelatinisation process which occurs at temperatures above 50-60°C. According to our invention, enzymatic hydrolysis is carried out just after starch gelatinisation between the hot baking plates using a thermostable α-amylase.

The α-amylase is preferably added to the batter at the same time as the other ingredients, and is allowed to hydrolyse starch in the oven at a temperature around 100°C during the period of time corresponding to water evaporation. The enzyme is then progressively inactivated at the higher temperatures reached in the drying phase. The α-amylase can also be added to the batter just before the baking stage since the enzyme will hydrolyse starch only in the oven. This approach eliminates the risk of possible α-amylase inactivation by proteolytic attack in batters containing proteases. By adjusting the level of α-amylase as well as the amount of gassing agents, it is possible to create different wafer textures adapted to various food products. In addition the enzymatic cleavage of starch, by increasing the level of reducing sugars, facilitates browning reactions and has a positive impact on the flavour of the final products (Maillard reactions).

The wafer obtained can be presented to the consumer as a wafer by itself, but it can also be further processed. For example, it is possible to make a sandwich bar composed of external layers of wafers framing different fillings, for example chocolate, jelly, compound chocolate, ice-cream, sorbet, nut paste, cream-based product, cake, mousse, caramel, praline, jam, wafer rework or a combination of these ingredients with or without inclusions of the same ingredient on a different state or of a different ingredient. The sandwich can also be succession of a wafer and filling pair, the first and last layers being wafer, comprising from 2 to 15 wafer layers.

It is also possible to use the wafer as the centre or part of the centre of a coated product. The coating can be any of the usual coatings, for example a chocolate coating, a compound coating, a caramel coating, or a crumble coating.
If the flour based food product is a wafer, it can be a flat wafer either having geometric shapes or cartoons character shapes, as well as alphabet letters or numbers, for example. It can also be a three dimensional shaped wafer such as a cone, a glass, a dish, or a sugar wafer, for example. If the flour based food product is a biscuit, it can comprise inclusions of sugar, chocolate, caramel, fruit, nut, or the like. If the flour based food product is a cracker, said cracker can comprise cheese, tomato paste, ham, herbs, and/or spice flavours, for example, and can be shaped as a square, a triangle, a disc, a cartoon character or face, or any other suitable shape.

The process according to the invention comprises the steps of preparing a mixture of at least flour, water and a thermostable α-amylase, and cooking the product in an oven or on or between baking plates. In an embodiment, when the flour based food product is a wafer, the cooking time can be comprised between 60 and 180 seconds, preferably 90 to 120 seconds. The plates temperature is preferably comprised between 140 and 180°C at the beginning and the end of the process, preferably 160°C, and the variation of temperatures should not, according to the preferred embodiments of the invention, be less than 25°C nor more than 50°C.

We have also surprisingly found that the enzymatic cleavage of starch operated by the α-amylase increases the level of reducing sugars and so facilitates the browning reactions together with a positive impact on the flavour of the final products. The more the α-amylase is present in the batter, the faster the browning is achieved. Consequently, the process according to the invention also allows a faster browning of the wafer.

We have also found that there is a relation between the level of α-amylase incorporated into the batter and the hissing time during baking. The hissing time is defined as the time period corresponding to the audible noise produced by gas and steam release at the beginning of the baking phase. Accordingly, a batter containing thermostable α-amylase will have a reduced hissing time, indicating that the release of gas and steam from wafers during cooking is facilitated. As a consequence a nice browning is achieved more rapidly.

The product according to the invention is a wafer containing at least flour, water and treated with a thermostable α-amylase. Preferably, it is prepared using gassing agents such as carbon dioxide, sodium bicarbonate, ammonium bicarbonate or low boiling-point components able to create gas cell structures. Gassing agents can be replaced by or added together with gas generating microorganisms, such as bacteria or yeasts. The thermostable α-amylase can be incorporated in the batter at levels of 3 to 2500 units per gram of batter, preferably 10 to 1000 units per gram of batter according to the structure wished in the final product.

The units used here are Modified Wohlgemuth Units (MWU), defined as the amount of enzyme, which dextrinizes one milligram of soluble starch to a defined blue value in 30 min under the conditions of the assay established by Valley Research Inc., South Bend, USA.

In another embodiment, the wafer according to the invention is also prepared from a batter treated with proteases, such as endo-proteinases, or xylanases (pentosanases), or a combination of these types of enzymes. Proteinases are used to prevent lumps formation, and any other type of enzyme known in the baking industry to have the same purpose can indifferently be used in combination with or in replacement of the above-cited enzymes. Preferably, the α-amylase is incorporated to the batter just before cooking, for example 60 seconds before, in order to protect the α-amylase from being damaged by the proteinase.

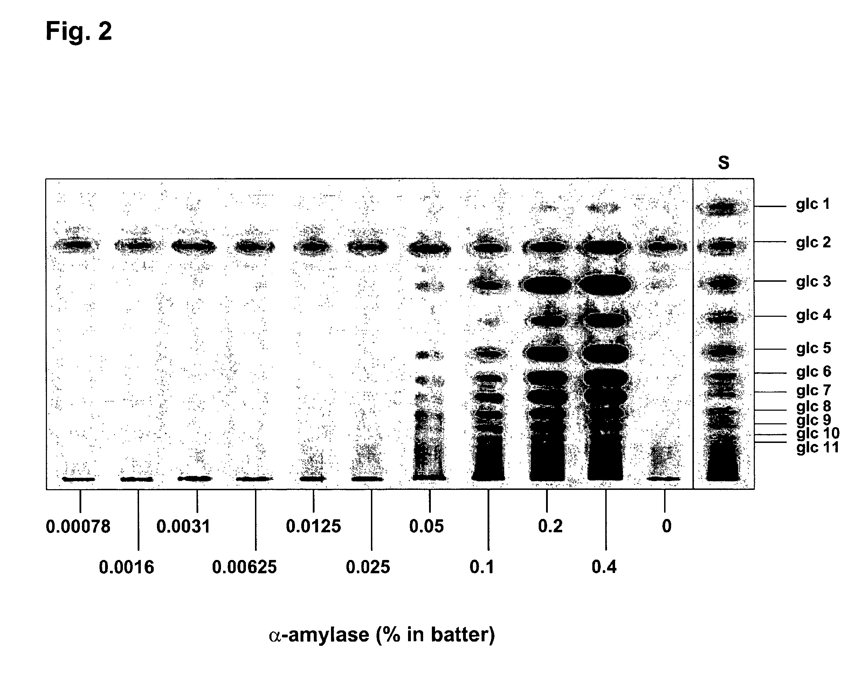

The wafer according to the invention presents a particular chromatography profile (see Fig. 2). Indeed, the α-amylase reduces the molecular weight of starch by liberating soluble dextrins. Accordingly, the wafer according to the invention may be characterised by its maltodextrin profile, no free maltodextrins being added to the preparation. These oligosaccharides can be analysed by measuring the level of reducing sugars in the final product or by chromatographic techniques (TLC, HPLC) or electrophoresis (FACE). Starch degradation can be estimated by gel filtration.

The process according to the invention consists in mixing together at least flour, water and a thermostable α-amylase to make a batter that will then be submitted to cooking. In a preferred embodiment, the batter is cooked between two baking plates for approximately 120 seconds but in other envisaged embodiments, a dough can be prepared and cooked partially or totally on one hot surface or in an oven, for example.

Although not wishing to be bound by theory, we believe that an explanation of the invention can be as follows: when the batter arrives in contact with the hot cooking surface(s) it forms a very thin layer of gelatinised starch (skin) not degraded by the α-amylase since the enzyme in close contact with the hot baking plates is immediately inactivated. The gelatinised starch in the inner part of the wafer remains a longer time at a lower temperature which favours enzymatic hydrolysis. Starch is modified inside the batter during cooking, that is to say is in-situ modified. The fact that maltodextrins, which are known for their sticking properties, are not directly in contact with the cooking surfaces explains why the wafers or biscuits according to the invention can be cooked without sticking despite a high content in maltodextrins. At the end of the cooking time, almost all or all the α-amylase present in the wafer has been inactivated. Said inactivation is achieved by the high temperature inside the batter, which can go up to 160°C, for example.

The process according to the invention can comprise the step of adding to the batter proteases, such as endo-proteinases, or xylanases (pentosanases) or a combination of these types of enzymes. Proteinases are used to prevent gluten lumps formation, and any other type of enzyme known in the baking industry to have the same purpose can indifferently be used in combination with or in replacement of the above-cited enzymes.
It can also comprise the steps of adding gassing agents such as carbon dioxide, sodium bicarbonate, ammonium bicarbonate and/or gas generating microorganisms in order to have a synergistic effect on the wafer texture.

We have surprisingly found a relation between the content of α-amylases and the browning of the wafer. Accordingly, the more α-amylase is contained in the batter, the fastest the browning of the wafer is obtained.

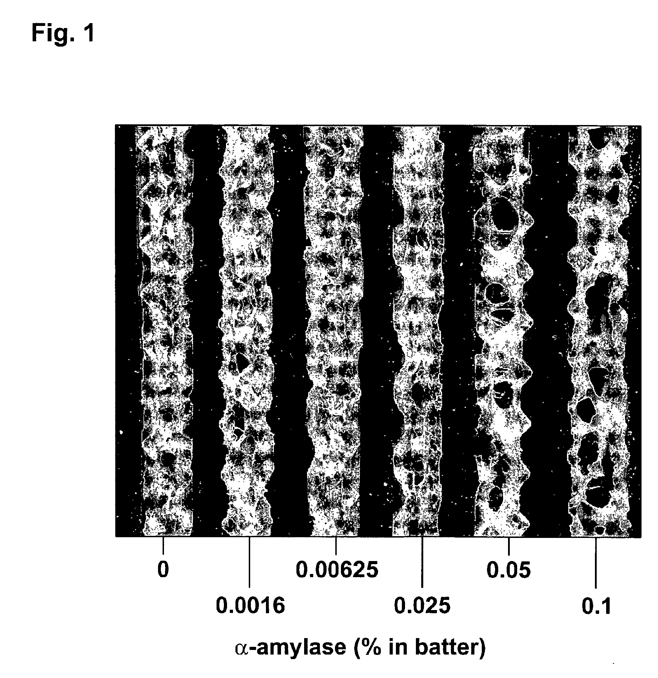

The last aspect of the present invention is related to the use of α-amylase to manipulate textural attributes of flour based products. Preferably, such flour based products are thin products. Accordingly, the amount of α-amylase used allows variations in the wafer texture (see Fig.1). As can be seen, when the level of α-amylase used increases, the size of the air bubbles into the wafer grows. Another modification induced by the amylase treatment is the texture change of the gas cell wall itself due to reduction of starch molecular weight.
The use of α-amylases according to the invention can be combined with the use of gassing agents; indeed, the combined use of these two ingredients makes possible the generation of various structures adapted to the desired products.

The use of thermostable α-amylase in wafers presents many benefits. Accordingly, new and specific textures of the product can be processed at the request, by varying the amount of thermostable α-amylase in the batter. Another positive aspect of the invention lies in the fact that, surprisingly and contrary to the skilled person expectations, the viscosity of the batter comprising thermostable α-amylase is not increased, and the batter remains easily machinable. Furthermore, the stickiness of the batter is not changed and the batter according to the invention does not stick to the baking plates.

According to the last aspect of the invention, there is provided a method for modifying starch in a wafer without increasing batter viscosity and wherein the batter does not stick to the baking plates, by treatment of said batter with a thermostable α-amylase.

### Examples

The following examples are illustrative of some of the products and methods of making the same falling within the scope of the present invention. They are not to be considered in any way limitative of the invention. Changes and modifications can be made with respect to the invention. That is, the skilled person will recognise many variations in these examples to cover a wide range of formulas, ingredients, processing, and mixtures to rationally adjust the naturally occurring levels of the compounds of the invention for a variety of applications.

### Example 1: illustration of the modifications in a wafer structure according to the amount of enzyme used in the batter preparation.

A batter comprising 780 g of wheat flour, 720 g of water and minor ingredients is treated for 30 min at 35°C with a commercial enzyme blend containing protease and xylanase to obtain the desired viscosity. 2 g of sodium bicarbonate is added to the mixture. Various amounts of thermostable α-amylase, Validase H 340L from Valley Research containing 340 000 Modified Wohlgemuth Units (MWU), are added to batter samples 1 minute before baking. The final enzyme concentrations in batters are 0.0016, 0.00625, 0.025, 0.05 and 0.1 %. Batters are baked for 2 min in an oven with plates heated to 160°C.

Microphotographs in Fig.1 show cross-sections of the wafers obtained accordingly. The expansion of gas cells is well visible, mainly in the case of high levels of α-amylase, indicating that either mild or extensive structural changes can be generated by applying the concepts described in the present invention.

### Example 2: modifications of starch in wafers induced by the α-amylase treatment.

A batter was prepared by mixing 720 g of wheat flour, 780 g of water, minor ingredients and 2 g of sodium bicarbonate. Various amounts of the α-amylase described in example 1 are added to aliquots to obtain batters containing 0.00078, 0.0016, 0.0031, 0.00625, 0.0125, 0.025, 0.05, 0.1, 0.2, 0.4 % of enzyme. One minute after addition, batters are baked for 2 min in an oven with plates heated to 157°C. The wafers are ground and extracted in 7 mM sodium carbonate at 40°C for 10 min. The extracts are centrifuged and the supernatants analysed by thin-layer chromatography.

Results can be seen on Fig. 2, which shows that the starch present in the flour can be modified differently according to the level of enzyme, a high amount of maltodextrins corresponding to a high degree of starch hydrolysis.

Accordingly, it is possible to produce a wide range of starch degradation profiles by varying the enzyme concentration, and therefore it is possible to obtain different wafer textures.

### Example 3: hissing time

Another way to detect starch modification during baking is the measurement of hissing times. A long hissing time corresponds to a gelatinised starch of high viscosity, which offers a relatively high resistance to gas release. By contrast, enzymatic hydrolysis, by decreasing starch molecular weight and therefore viscosity, facilitates gas escape. As a consequence shorter hissing times are observed.

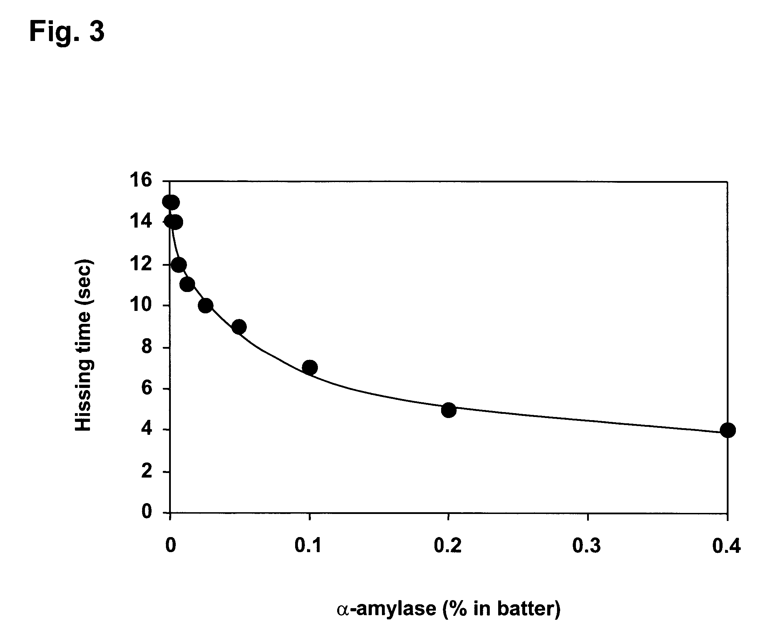

Fig. 3 shows the results of this experiment. Data were collected during baking the batters mentioned in example 2.

### Example 4: sensory analysis of wafers

A batter comprising 780 g of wheat flour, 730 g of water and minor ingredients is treated for 30 min at 35°C with a commercial enzyme blend containing protease and xylanase to obtain a suitable viscosity. 2 g of sodium bicarbonate is added to the mixture. The thermostable α-amylase described in example 1 is added in the first experiment at a level of 0.25 g/kg batter, in the second experiment at a level of 0.5 g/kg batter and the batters are baked for 2 min in an oven with plates heated to 160°C. Reference wafers without α-amylase are also prepared.

Descriptive sensory data on texture were collected from a group of 8 trained evaluators.

First experiment results: increased hardness and brittleness were perceived by the majority of the evaluators. Melting in the mouth was also mentioned as a main change, resulting in a wafer with new and pleasant textural properties.

Second experiment results: a significant increase in hardness and crispness was reported by the evaluators whereas scores for brittleness attribute were similar to those obtained with the reference wafers.

### Example 5: laminated biscuit

A dough is prepared by adding 319.5 g of flour to a mixture comprising 110 g of water, 40 g of palm oil, 25 g of sucrose, 3.75 g of sodium chloride, 2.85 mg of sodium bicarbonate and 250 mg of Validase BAA (Valley Research, Inc., USA, 1 200 000 MWU/g). A reference dough is prepared using the same formulation but without addition of enzyme. The doughs are mixed for 120 sec in a Hobart N-50 mixer with speed setting at position 1 and then left to relax for 2 hours.
The doughs are laminated in a vertical laminator with gap between rolls set at the shortest position (0.098 inches). The resulting sheets are cut into rectangular pieces (6.0 x 3.5 cm) and the biscuits are baked for 7'30" at 230°C in a rotary oven.

Sensory data were collected from a group of 8 trained evaluators. All evaluatorss could distinguish physical and sensorial differences between biscuits. Enzyme modified biscuits were scored as harder and crispier than the standard biscuits. They were also found more toasted than the standard and an increase in sweetness was also mentioned. In addition evaluators also indicated that the unpleasant floury and sticky sensation perceived in standard biscuits disappeared in biscuits treated with thermostable α-amylase.

## Claims

1. Flour based food product comprising a thermostable α-amylase and in-situ modified starch.

2. Flour based food product according to claim 1 wherein the flour based food product is a wafer, a biscuit or a cracker.

3. Flour based food product according to claim 2 wherein the wafer is a flat wafer, a sugar wafer, or a three dimension shaped wafer.

4. Flour based food product according to one of claims 1 to 3 wherein the α-amylase is present in an amount of 3 to 2500 units per gram of the final dough or batter, preferably 10 to 1000 units per gram of batter

5. Wafer according to one of claims 1 to 4 also comprising proteinases and/or xylanases.

6. Flour based food product according to one of claims 1 to 5 comprising gassing agents and/or gas generating microorganisms.

7. Flour based food product according to one of claims 1 to 6 wherein the molecular weight of starch has been reduced or soluble dextrins have been produced.

8. Flour based food product according to one of claims 1 to 7 wherein the α-amylase is of bacterial, fungal or plants origin.

9. Process for making flour based food product comprising the steps of making a batter or a dough by mixing at least flour, water and a thermostable α-amylase and baking it on at least one hot surface.

10. Process according to claim 9 wherein the flour based food product is a wafer.

11. Process according to claim 9 or claim 10 wherein the flour based food product batter or dough further comprises at least one protease and/or at least one xylanase.

12. Process according to one of one of claims 9 to 11 wherein the batter or dough comprises gassing agents and/or gas generating microorganisms.

13. Use of thermostable α-amylase to manipulate textural attributes of flour based food products from the group consisting of wafers, biscuits and crackers.

14. Use of a thermostable α-amylase according to claim 13 together with at least a gassing agent.

15. Method for modifying starch in a wafer without increasing batter viscosity.

16. Method according to claim 15 wherein the batter is not sticking to the baking plates.

17. Method according to claim 15 or claim 16 wherein the batter is treated with thermostable α-amylase.
